# EUROPEAN PATENT SPECIFICATION

(11) **EP 3 772 488 B1**
(45) Date of publication and mention of the grant of the patent: **03.07.2024**
(21) Application number: 19382703.7
(22) Date of filing: 09.08.2019
(51) Int. Cl.: C02F 1/34, H05H 1/24, B01J 19/26, B01J 19/00, B01F 25/433, B01F 25/23

(54) **DEVICE AND METHOD FOR PURIFYING WASTEWATER CONTAINING METALLIC, NON-METALLIC AND METALLOID POLLUTANT CHEMICAL SPECIES**
VORRICHTUNG UND VERFAHREN ZUR REINIGUNG VON ABWÄSSERN UMFASSEND METALLISCH, NICHTMETALLISCH UND METALLOID SCHADSTOFFHALTIGE CHEMISCHE SPEZIES
DISPOSITIF ET MÉTHODE D'ÉPURATION DES EAUX USÉES POLLUÉES PAR DES ESPÈCES CHIMIQUES MÉTALLIQUES, NON MÉTALLIQUES ET MÉTALLOÏDES

(43) Date of publication of application: 10.02.2021
(73) Proprietor: Ventrrad Inversiones, S.L., 36002 Pontevedra (ES)
(72) Inventor: VENTURA PÉREZ, Luis, 36156 Pontevedra (ES)
(74) Representative: Carlos Hernando, Borja

(56) References cited:
- US-A- 2 597 422
- US-A1- 2004 099 614
- US-A1- 2008 099 410
- US-A1- 2009 321 367
- US-B1- 6 221 260

## Description

### OBJECT OF THE INVENTION

The present invention relates to a device for purifying wastewater which contains pollutant chemical species and is used to remove and eliminate said chemical pollutants from wastewater by acting on the characteristics of reactions in terms of their speed, efficiency (close to 100 %), activation temperature, rearrangement of anionic and cationic charges, electrostatic interactions, with possibilities of high treatment volumes of flow and reduced reaction times under one minute. The device is integrated in a standard physicochemical purification plant which provides the physical means for separating the precipitated/coagulated pollutants. The invention also relates to the method which is carried out in said device, which is small-sized and scalable.

The device according to the invention is capable of performing a method which improves purification processes for metals, such as iron, aluminium, copper, zinc, nickel, chromium, lead, magnesium and manganese, among others; for non-metals, such as fluorine and phosphorus, among others; and metalloids, such as boron, among others, completely eliminating chemical precipitation/coagulation additives, improving the reaction speed, reaction efficiency, the speed of separating the pollutants from the medium, the time used to attain results and the cost of treatment per cubic metre treated.

The device allows implementing a process that exceeds the known methods in terms of treatment speed and efficiency, is more economical, of a smaller size, and adapts to any volume of flow as it is scalable.

The device has been developed for the treatment of the industrial wastewater containing complex pollutants that are highly stable in water, pollutants with antagonistic precipitation conditions, with a high variability of the type of pollutants, as well as high concentrations of pollutant elements.

The increase in the speed of the precipitation/coagulation reactions achieves an important improvement in purification times, whereby the device exceeds current purification techniques, improving costs in the development of new purification systems and in their construction costs, as treatment tank volumes that are 40 % smaller are required.

The invention adapts to any physicochemical purification system which has a neutralisation, flocculation and decantation/flotation process, as a consequence of its versatility and small size, and therefore it is unnecessary to make any modifications to current purification systems, thus eliminating the investment costs that other devices and methods entail.

### DESCRIPTION OF THE STATE OF THE ART

In the state of the art, different methods and devices or equipment are known for the purification treatment of liquids and wastewater with metallic, non-metallic and metalloid pollutant chemical species; however, said methods and devices do not allow a stable and linear process of the purification process to be achieved over time given the enormous variability in concentration and characteristics of industrial wastewater. Nor are there known methods or devices with efficiencies greater than 99 % and initial concentrations greater than 1,000 mg/l for volumes greater than 10 m³/h. This impossibility is on account of the lack of speed in purification reactions, with long reaction times, greater than 5 minutes, which do not allow a stable process to be maintained, as it has an important commitment between volume of flow to be treated and the cost necessary for achieving the necessary treatment space. At the same time, the methods and devices do not provide the high kinetic energy of catalysation necessary for achieving reaction efficiencies which must be greater than 99 % to achieve the desired results given current environmental requirements.

To date, most methods and devices for purifying metals, non-metals and metalloids have been physicochemical processes based on the metering of precipitation/coagulation additives, whether they are aluminium salts or iron salts, chemical compounds with oxidising characteristics, gases of different types, or different energy inputs in addition to the actual kinetic energy necessary for the movement of the fluid, to form positively charged hydrolysed species that can bind to the pollutants of the medium for colloid formation.

In the coagulation processes, the physical and chemical stability of the wastewater to be treated is important for the colloid formation process to occur correctly. The minimal variation in physical constants (temperature, density, pressure, etc.), as well as in chemical constants (changes in pollutant concentration, different proportions between different pollutants, etc.) create instability in the coagulation process. The coagulation process itself cannot modify the physical and chemical conditions of the raw wastewater for the efficiency of the process to be the theoretical maximum for each process. Due to the constant variation in raw industrial wastewater, purification processes present fluctuations in coagulation, preventing the theoretical maximum reaction efficiency in the formation of hydrolysed colloidal species from being reached. In the physicochemical processes which are mostly used today, the mean treated wastewater efficiency is around 82.5 %, which prevents the environmental objectives of purification from being met in most cases.

Other methods and devices are merely symbolic in current physicochemical purification processes, presenting serious problems in maintaining a purification process that is stable over time. These stability problems result in problems in terms of treatment costs, either due to the consumption of specific chemical additives, important energy consumptions, high acquisition and/or maintenance costs, important treatment times entailing large purification surfaces or treating small volumes, resulting in efficiencies that are lower than the environmental requirements, etc. Among these devices are ultrasound equipment, electrocoagulation equipment described in document WO03/032452A1, equipment producing hydrodynamic cavitation such as that of document WO03/082753A1, etc.

Devices for generating plasma are known, but they include different additions of gases or products that react with the wastewater. Document US9,346,691B2 describes a method for forming plasma which is based on introducing a gas into a rotating system with additional energy expenditure. Another plasma generating device like the one described in document US9,475,713B2 uses electric current which is discharged in a stream of water that is pressurised to a greater or lesser extent. In other plasma generating devices it is necessary to increase the temperature, as occurs in document WO97/22556A1.

Document WO 01/87473 A1, family member of document US 2004/099614 A1, discloses a purification device which describes rotation processes with high centrifugal forces that create a principle of oxidation for the treatment of COD and biological species present in wastewater, with high purification times for oxidisable species (COD) of three hours. This device makes no reference to the purification of metallic elements in wastewater.

Likewise, many patent documents specify results obtained by rotational movements that generate high centrifugal forces, which are not produced in the device of the invention, with elements for rotational movements that generate large centrifugal forces with high treatment times and lower efficacies over time. These movements allow chemical conditions of the wastewater to be varied to modify the solubility constants. The modification of these constants improves reaction efficiency, but always with the inclusion of an additive that is capable of triggering the precipitation/coagulation reaction.

Other documents refer to hydrodynamic cavitation processes in which high energy expenditures are needed to achieve such high pressures for carrying out the process. The process with these inventions is constant and their dynamics cannot be varied according to the type of raw wastewater being treated, causing an oxidation process, never a reduction process, in the water for affecting metals and metalloids, and additives must be used in order to trigger the process. These techniques for the most part are aimed at the degradation of organic matter in wastewater.

Further examples of devices are given in US 2 597 422 A, US 6 221 260 B1, US 2009/321367 A1 and US 2008/099410 A1.

The invention presents important advantages with respect to the mentioned treatments, achieving high efficiencies over time and very significant improvements in colloid formation processes in the purification of metals, non-metals and metalloids.

In all cases, the present invention achieves a stable process over time with efficiency greater than 99 % in terms of elimination of the described pollutants. Likewise, the reaction speed is increased, achieving precipitation/coagulation reactions in times less than 1 minute, which provide many advantages in terms of purification system usage and investment costs, using spaces that are 40 % smaller than the current devices on the market.

The invention provides high activation energy to reactions which is derived from high speed and pressure impact, with this collision ionising the particles of the flow, increasing electromagnetic interactions, vaporising a high percentage of the flow, producing controlled hydrolysis that allows creating suitable reaction conditions, generating the hydroxyl groups necessary for helping in the precipitation/coagulation and the stability of the reaction, preventing bidirectionality problems in precipitation/coagulation reactions with chemical additives.

The device and method of the invention regulate the purification process given the variability of the inflowing water by internally measuring the parameters necessary for controlling precipitation/coagulation reactions and thus adjusting for each case the energy necessary to reach 99 % efficiency.

The device object of the invention has a small size for high volumes of flow, preferably having an approximate size of 80 cm x 20 cm x 80 cm, for a treatment volume of flow of 288 m³/day. The equipment is completely scalable, so high economically viable and larger treatments are possible.

Due to these advantages, the device is capable of creating the physicochemical conditions suitable for increasing the efficiency of the necessary chemical reactions, providing the energy for a chemical reaction, which is generally bidirectional, to achieve maintaining a single direction, achieving stable and coagulable chemical species.

In a coagulation reaction of a metallic, non-metallic and metalloid compound, referred to as chemical species A, a known amount of a chemical additive referred to as B is metered. As additive B is metered the reaction gradually yields the chemical species AB, which can potentially form a colloid. The drawback today lies in that during the time that the concentration of species AB is oversaturated with respect to species A+B, species AB would dissociate back into A and B to maintain their chemical equilibrium in the wastewater. These purification processes in which chemical additives must be added present this reversibility because they do not achieve a stable chemical species AB in the medium since they include a chemical compound which varies the chemical conditions of the wastewater, creating a state of semi-stability, which dissociates chemical species AB, if the concentrations of the chemical species A and B vary, and the physical conditions are not suitable as they do not adapt to the new reaction conditions. This is why higher efficiencies over time in reactions of this type are not achieved today.

The device object of the present invention allows maintaining the reaction since the physicochemical conditions necessary for species AB to be a species stable are created due to high activation energies by the electromagnetic interactions which create colloidal compounds without including additives. Any group of chemical elements under suitable physical conditions (temperature, pressure, light, etc.) and also suitable chemical conditions (suitable concentration, suitable media, etc.) can create elements with stable structures that can give rise to stable solids, like in the case of the formation of crystals that give rise to minerals.

The method for treatment in which the device object of the present invention is incorporated is based on constantly adapting the physical conditions and influencing the chemical constraints to achieve ideal conditions for the precipitation/coagulation of metallic, non-metallic and metalloid pollutants, primarily influencing the aforementioned constraints. The stability of chemical species AB is thereby achieved by the increase in energy, as a change in physical and chemical conditions derived from the kinetic energy, which allows achieving a unidirectional reaction.

### DESCRIPTION OF THE INVENTION

The first object of the present invention is a device for purifying wastewater which contains pollutant chemical species according to claim 1. Additional features of the invention are included in the dependent claims.

Namely, the present invention relates to a device comprising an inlet manifold, followed by a small-sized rapid mixing chamber, from which there depart four turbulent flow circuits comprising pressure regulation valves at the inlet of each circuit and ending in a chamber referred to as plasma chamber in which the four turbulent flow circuits converge. After the chamber there is arranged a circuit which channels the outflowing water.

By means of the present device the drawbacks of the current treatments and devices of the state of the art are eliminated, as it is not necessary to meter additives to maintain unidirectionality of the reaction.

As mentioned, the device of the invention allows eliminating metallic, non-metallic and metalloid pollutants in an aqueous medium through processes that modify the chemical state of these pollutants by creating electromagnetic interactions generating particles with a high electric charge. The creation of these strong electromagnetic interactions gives rise to the electric charge of the particles which achieve a larger number of contacts between metallic, non-metallic and metalloid compounds, with a process being created at the same time, generating hydrolysis. The generation of this hydrolysis gives rise to the creation of hydroxyl groups which are picked up by the particles ionised for precipitation/coagulation.

This change in the chemical state of the pollutants accelerates and enhances their removal from the aqueous medium, with the device contributing to the creation of important variations in speed, temperature, pressure, particle ionisation, rearrangement of charges and electromagnetic interactions.

The process whereby efficiency greater than 99 % is achieved in a brief period of time is initially on account of an increase in fluid speed (kinetic energy) with a strong change in directions in which compression and decompression of the liquid takes place, generating a turbulent flow. This turbulent flow generates a disorderly movement, where the random path of the particles forms periodic vortexes, breaking up the inter-particle cohesion. Once this chaotic disarrangement is achieved, the circuit is compressed in diameter and flattened, becoming wider, generating a sheet of water less than 0.15 mm in thickness and a strong compression of the water. At this point, the flow speed is increased by 150 % due to a strong acceleration as a consequence of the widening and a subsequent turn of 42°, changing the direction of the movement of the water. Compression continues after this widening and is increased to enter a plasma chamber, accordingly increasing the flow speed. The plasma chamber is the physical location where the most drastic changes in flow occur and where the desired effect of eliminating the pollutant elements is achieved. After the initial segment of the plasma chamber, the water again experiences a new increase in acceleration and compression due to the existence of a new turn, with an angle between 81° and 83°, changing the direction of the flow perpendicularly. Once maximum speed, mean speeds between about 230 m/s and 240 m/s, and the positive maximum pressure of the circuit between about 140 and 160 bar have been achieved, the flow which occupies the entire surface of the walls of the chamber impacts at a central point, opposite the inlet region of the flow into the chamber. This impact generates a collision in which the entire kinetic force is released, ionising the particles in the flow and producing a radical change in the state of the flow. The impact produces such a high release of energy that it gives rise to vaporisation, where a high percentage of the water transitions to a gaseous state in microseconds. In this gaseous state, a mean percentage between 65 % and 70 % of the particles achieve such an intense ionisation that they form a new state of aggregation referred to as plasma. A number of phenomena occur in this plasma state, such as the formation of an ultrasound during the impact, as well as the formation of a small light beam due to the enormous electromagnetic forces present on account of decompression of the flow. An infinite number of electromagnetic interactions between particles are created in this plasma state, with an electron transfer between them which gives way to the formation of hydrolysed species, with a stable colloid being formed. A coagulation process referred to as a charge-based coagulation process is thereby generated, in which a stable compound AB is generated under the new flow conditions. At the same time, the ultrasound and vaporisation phenomena generate hydroxyl radicals which increase colloid formation through a hydrolytic process.

The wastewater before the device of the invention is delivered by pumping equipment, which provides speed and pressure, i.e., kinetic energy, to the inlet manifold from a neutralisation tank, which belongs to the purification plant, which may be new or already existing, for its admission in the rapid mixing chamber. The objective of this rapid mixing chamber is to slow down the inlet speed of the flow into the invention. At the same time, it has the purpose of homogenising the inflowing wastewater, and thus diverting a flow with no variations in composition or in physical conditions to each circuit. It is important for the flow accessing the turbulent flow circuits not to present variations in homogeneity, to thereby achieve a constant and effective process at the inlet into the plasma chamber.

Before the turbulent flow circuits there are located a series of valves which allow varying the speed and the initial working pressure in order to adapt to the control values established at the end of the equipment. At the same time, these valves regulate the variations in pressure of the circuits, maintaining the four circuits at identical pressure values.

The turbulent flow that is generated in the circuits has two clear functions once correct homogenisation of the flow is achieved. First, it allows generating disarrangement in all the particles making up the wastewater. This disarrangement generates random movements, so the number of interactions between said particles is increased. Second, this turbulent flow allows variations in the speeds of the particles forming it. This difference in speeds based on micro-vortexes that are formed, along with the increase in the number of interactions generate impacts between particles having different kinetic energies. These two phenomena, random interactions between particles with different speeds, allow the particles to become electrically charged. This phenomenon creates particles with low charges but which are important enough to establish relationships between positively and negatively charged particles. The differences between charges create a new interaction process, redistributing and rearranging the particles in the flow based on the repulsive or attractive forces existing between the charge of a particle and the charges of the particles adjacent to same.

Once a rearrangement of particles which tend to be surrounded by charges of the opposite sign, which rearrangement is necessary for the formation of a colloid, has been achieved, a linear flow is established which stabilises them at a constant flow speed and in a constant direction. This rearrangement is achieved increasing the circuit surface with a widening thereof and the gradual decrease in the initial diameter. This widening achieves that the flow forms a fine layer of wastewater which is compressed by increasing speed and pressure.

Once this first compression is achieved, the layer of water must have a thickness of no more than 0.15 mm. This decrease in thickness allows the impact between volumes of flow in the plasma chamber to take place in the entire surface of the flow, and therefore no particles are protected from impact. To achieve this compression without losing speed, the flow is subjected to a turn between about 40° and 44°, which allows increasing pressure on the fluid on average between 110 and 130 bar. This compression of the flow is created by the turning force to which each particle is subjected at this point. This compression due to turning forces which increases the pressure of the fluid also has an effect on the increase in its speed.

Maximum compression and speed are achieved in the flow when the next change in direction is achieved in a turn with an angle between 81° and 83° inside the plasma chamber. After this turn, the flow reaches what is referred to as the impact point, where all the accumulated energy is released and the most important phenomena for achieving the objective take place. At the impact point, the entire flow which is compressed into a fine layer and at a high speed, greater than 200 m/s, preferably between 230 m/s and 240 m/s, loses these conditions in milliseconds, achieving complete decompression and zero speed. The flow surrounds the entire chamber, allowing for an empty space between this fine layer and the centre of the chamber. The fine layer forming the flow, surrounding the entire plasma chamber, is led to a central point where the strong impact described above is achieved without contacting any material, where it is the actual flow that opposes itself. This high-speed impact and compression generates a rhomboidal shape due to the decompression that is generated. In this impact, part of the flow vaporises, with part of the water transitioning from the liquid state to the gaseous state. In this impact, substantial ionisation of the particles present in the flow is generated due to the high speed and the arrangement of the charges generated in the turbulent flow. This strong ionisation of the particles generated in a gaseous state, as a consequence of vaporisation, triggers the formation of a plasma in which the particles do not present electromagnetic equilibrium. This lack of electromagnetic equilibrium generates an exponential increase in the interactions of particles in the wastewater and immediate colloid formation.

The speed and pressure of the flow has been generated so that in a linear translation movement, without rotations, a rearrangement of charges in the flow is initially generated in order to subsequently generate a complete structural breakdown of said flow, canceling the electromagnetic equilibrium of the particles and increasing the metallic, non-metallic and metalloid colloid formation kinetics.

Several phenomena take place in the plasma chamber, which show the change of state of part of the wastewater. First, ultrasounds are generated giving rise to a brief hydrolysis process, producing negatively charged elements reacting with the high concentration of cations in the flow. Another simply anecdotal process is the formation of luminescence around the rhomboid formed by the flow at the time of impact, which demonstrates the existence of a plasma state.

Once this phase is over, the wastewater is led to the outlet manifold, the water returning to its usual state with an increase in temperature of 7 °C. This outlet manifold runs into the neutralisation tank.

Based on the foregoing, the device object of the invention allows performing the following method, the second object of the invention according to claim 5, for purifying wastewater with metals, non-metals and metalloids. The main steps of said method are:
- Introducing a volume of flow of wastewater to be purified in the device of the invention,
- Establishing a turbulent flow in the channeling of a wastewater with metals, non-metals and metalloids,
- Homogenising the wastewater.
- Dividing the mixture into four independent volumes of flow,
- Generating a strong turbulent flow in each of the independent volumes of flow,
- Joining of the four volumes of flow at the inlet of the plasma chamber,
- Increasing volume of flow compression and speed,
- Impacting, decompressing and vaporising the volume of flow in the chamber,
- lonising the volume of flow until plasma is formed due to the impact of the particles in the volume of flow, and
- Channeling and integrating the volume of flow towards the outlet of the device of the invention.

The present invention does not require making any physicochemical modifications to the flow to achieve the expected result. Likewise, in the method of the present invention no precipitation additive is provided for eliminating the pollutant elements from the volume of flow of wastewater, preferably iron, aluminium, copper, zinc, nickel, chromium, lead, magnesium, manganese, fluorine, phosphorus and boron. By means of the present invention, a residual volume of flow with high initial concentration levels between 1,000 and 3,000 ppm is purified to an outlet volume of flow having pollutants at less than 1 ppm.

### DESCRIPTION OF THE FIGURES

The following figures which show a preferred exemplary embodiment of the invention in an illustrative and non-limiting manner are attached to the present description:

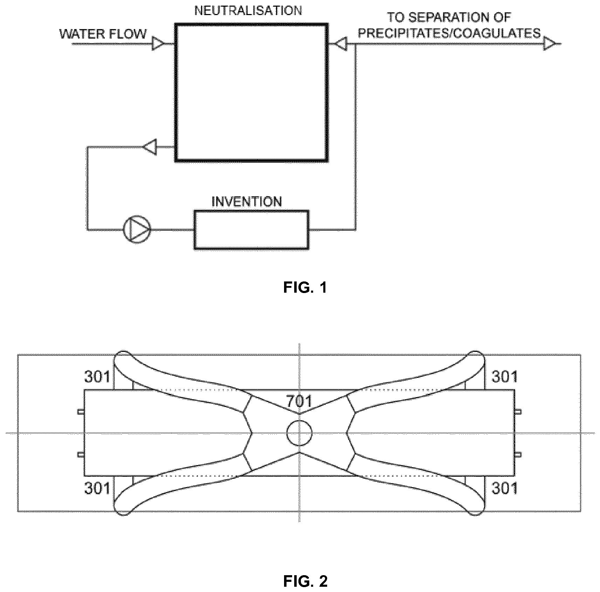

Figure 1 shows the situation of the device of the invention in a purification system.
Figure 2 shows a front view of the equipment object of the invention.

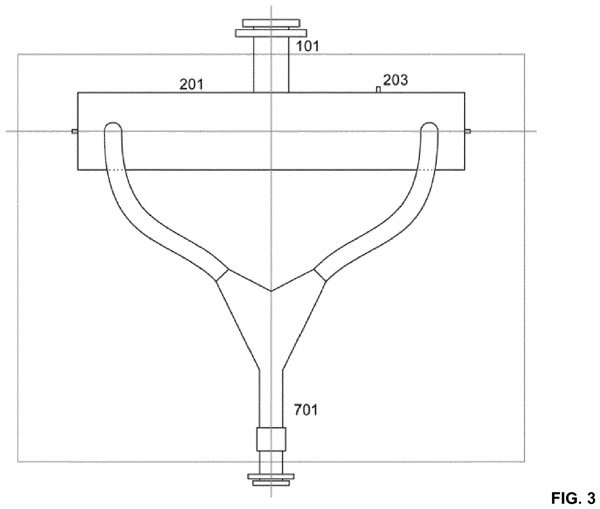

Figure 3 shows a bottom view of the equipment object of the invention.

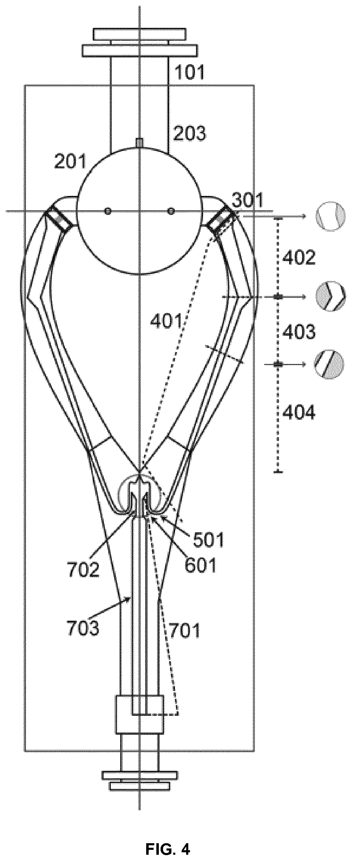

Figure 4 shows a side view of the equipment object of the invention.
Figure 5 shows a detail of the inside of a turbulent flow circuit with the compression chamber.

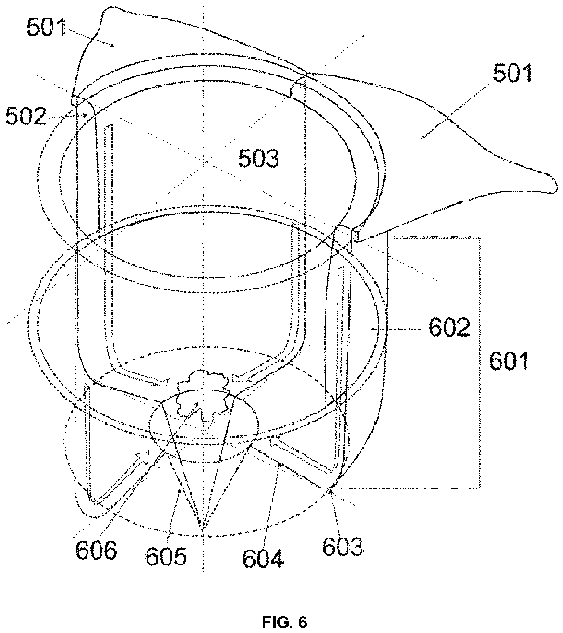

Figure 6 shows the configuration of the inlet of the compression openings and the inside of the plasma chamber

### PREFERRED EMBODIMENT

The device of the invention is formed from different components which allow triggering a series of steps or processes which give rise to the physicochemical phenomena described above.

As mentioned, the device essentially comprises an inlet manifold 101, followed by a rapid mixing chamber 201 from which there depart a number of four turbulent flow circuits 401 comprising pressure regulation valves 301 at the inlet of each circuit 401, this circuit being flattened in what is referred to as the compression opening 501, changing its circular surface to a triangular surface which then turns 42 degrees to end in a chamber referred to as a plasma chamber 601, from which a common final circuit 701 exits.

The inlet manifold 101 is the access for the flow of wastewater with the different metals to be treated into the device object of the invention. It channels the flow into the rapid mixing chamber 201, initially creating a homogenisation of the characteristics necessary to start the process inside the device. One of the main properties of the inlet manifold 101 is to achieve homogenisation conditions to enable creating, when a turbulent flow is established, the conditions which will have to continue in the following processes taking place in the device.

The manifold 101 is made of a high density polymer with a nominal diameter less than 65 mm, modifying flow pressure and speed characteristics. Internally, the manifold 101 has a series of projections on the inside of its inlet walls, generating a change in flow speed, varying the Reynolds number until reaching a turbulent flow value.

The rapid mixing chamber 201 arranged after the manifold 101 allows performing homogenisation of the particles forming part of the flow, while at the same time allowing uniform distribution of the flows through the four circuits located thereafter. The rapid mixing chamber 201 is a cylindrical body having a nominal diameter between 1.5 and 2 times the nominal diameter of the inlet manifold 101. This cylindrical body 201 internally consists of a series of circuits generating a flow with certain turbulence in which a thorough homogenisation of the particles found in the wastewater is created. This rapid mixing chamber 201 also comprises a pressure control system 203 which is carried out by means of a digital measurement system which regulates the inlet pressure into each of the turbulent flow circuits 401. Pressure is distributed by means of the volume of flow according to the needs of the treatment to be performed on the flow, and the configuration of this distribution is in accordance with the theoretical calculations for achieving the necessary chemical and physical changes in the flow. Flow pressures, speeds and the distribution thereof in each of the turbulent flow circuits 401 are configured depending on the type of pollutants to be treated and the objectives to be attained. This distribution of flows regulated by the pressure control 203 is performed by means of pressure regulation valves 301. These regulation valves 301 can be located in each of the connections between the rapid mixing chamber 201 and each of the four turbulent flow circuits 401.

Therefore, the pressure regulation valves 301 form a quadruplicate system which regulates the volume of flow inlets into each turbulent flow circuit 401 independently. These valves 301 are preferably made of a high density plastic polymer which allows withstanding high pressures of up to 250 bar and high temperatures of up to 500 °C, as well as important changes in temperature caused by the friction of the flow as it passes through the conduits. Opening and closing are regulated according to the pressure and speed needs required for the treatment in which the device object of the present invention is used. The establishment of pressure and speed conditions is regulated in each piece of equipment independently, depending on the calculations made for each treatment issue raised. These regulation gates 301 comprise three parts:
- The first is a plastic plate which allows the passage of the liquid through a series of large-sized holes. This support plate for the gate 301 is seated in the region closest to the rapid mixing chamber 201. The dimensions of the plate are comprised within the diameter of the pipe giving rise to circuit 401.
- The pressure regulation and control mechanism is placed in the second part of the gate. This mechanism has a length less than one third the total length of the regulation gate, and at the same time a gradual reduction in the diameter of the circuit 401 of the gate 301 is maintained, which ensures a more fine-tuned control over pressure and volume of flow, thus allowing both to be more precise. This initial diameter is reduced by a fixed angle to half the length between plates, to subsequently transition to the initial diameter of the gate 301. This form of the gate allows regulating the intake volume of flow into each circuit 401 depending on the pressures established for each treatment.
- A completely solid plate made of a plastic polymer with a specific diameter which is regulated by being moved from the rapid mixing chamber 201 to the turbulent flow circuit 401 is located in the third part of the regulation gate 301. This volume of flow regulation allows adjusting the entrance of reagents into each of the four turbulent flow circuits 401.

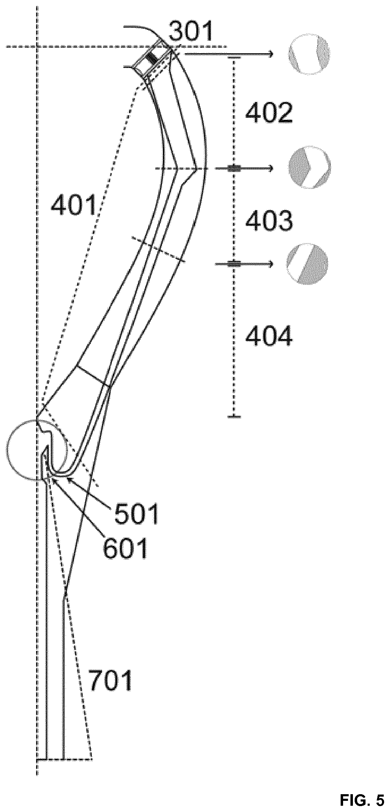

As mentioned above, the device comprises four turbulent flow circuits 401 which join one another at the compression opening 501. Each turbulent flow circuit 401 is divided into three different segments. Following the direction of the flow and starting at the outlet of the regulation gate 301, the first segment 402 of the circuit 401 is gradually reduced from the initial diameter which is between 2 and 2.5 times the final diameter of the circuit 401. This reduction is not performed in the overall diameter of the pipe, but rather takes place in two specific regions, leaving an asymmetrical form inside the circuit 401, shown in Figure 5, generating an important increase in speed and pressure. This asymmetrical reduction creates an important internal convection process in the fluid, initiating a strong turbulent flow. The decrease in diameter is achieved by means of internal asymmetrical pipe reductions with an angle of constriction which gradually reduces the volume in order to increase pressure and speed. In this gradual reduction, the circuit is constricted until reaching a volume of the circuit 401 which is expressed as nominal diameter, which is less than the initial nominal diameter of the circuit 401.

In the second segment 403 the circuit has an inner form which changes the direction of the turbulent flow shown in Figure 5. The form in this segment 403 increases the volume abruptly to then reduce it with a larger angle than the form of segment 1, 402. This internal form is maintained one third of the total distance of the turbulent flow circuit 401. The described internal form is maintained fixed in the rest of the third segment 404, allowing the turbulent flow to be maintained or increased. In this final segment or third segment of the turbulent flow circuit 404 there is an asymmetrical constriction that is greater than in the preceding segments, generating an extremely turbulent flow and creating intense destabilisation of the particles, which allows increasing the electromagnetic interactions of said particles. The function of the turbulent flow circuit 401 is to generate strong destabilisation of the particles in the wastewater, generating, as described in the process, a rearrangement of the particles due to the type of charge they have.

Once the turbulent flow circuit 401 has been surpassed, the flow runs into a compression opening 501 which is a hollow part having a flat end, and the other end is attached to the turbulent flow circuit 401. As this is a hollow part, from an overhead view there can be observed a form in the shape of an isosceles triangle, the unequal side having 3 mm, forming a crescent-shaped angle of 90 degrees which perfectly fits the circumference of the plasma chamber 601, with the identical sides of the triangle being between 1.6 and 1.8 mm long up to the attachment thereof to the turbulent flow circuit 401. From the lateral plane, there can be observed a forming having a width identical to the turbulent flow circuit where it is attached to same, and at the opposite end a width less than 0.15 mm. In this plane there can be observed a turn in the angle between about 40° and 44° up to the attachment thereof with the plasma chamber 601, a linear flow transitioning into a thin sheet of water having a thickness less than 0.15 mm is thereby created. Each of these compression openings 501 occupies 1/4 of the upper diameter of the plasma chamber 601. The compression openings 501 of the four circuits thereby surround the outer diameter of the plasma chamber 601. The lower part 502 of the compression opening 501 is attached and ends at the start of the plasma chamber 601. The upper part of this compression opening 501, at the same height of the attachment of the lower part 502 to the chamber 601, turns between 40° and 42° and penetrates into the continuation 503 of the compression openings 501 inside the plasma chamber 601, maintaining the same distance as in the compression opening 501 so as to maintain the thickness of the sheet of water less than 0.15 mm against the wall of the plasma chamber 601. This continuation 503 of the compression opening 501 is maintained until between about 34 % and 38 % of the height of the wall 602 of the plasma chamber 601. The hole that is left in the continuation 503 of the compression opening 501 forms the outlet circuit 701 from the plasma chamber, which has a flow opposite that of the inlet into the plasma chamber 601.

The plasma chamber 601 has a truncated cone shape with a diameter no greater than between 42 and 47 mm in the attachment with the compression openings 501, ending in a bottom plane 604 with a diameter between 0.80 and 0.84 times less than the upper diameter of the inlet, and a cavity referred to as an impact cavity 605 which is placed in the region opposite the inlet of the flow 501 and the outlet of same 701. The four compression openings 501 joined to one another in the chamber at point 502, and having a width less than 0.15 mm, with the continuation 503 of said openings 501 descending a distance between about 34 % and 38 % of the length of the truncated cone, creating a flow at the speed described above and a linear flow with the surrounded particles having charges of the opposite sign. The flow descends due to speed and pressure as a sheet of wastewater of less than 0.15 mm, completely adhered to the wall 602 of the plasma chamber. The flow descends until reaching the bottom 604 of the truncated cone where, by an angle 603 between about 81° and 83°, the direction of the flow becomes perpendicular. At this point, the flow is placed at the bottom 604 of the truncated cone, with said bottom maintaining a constant angle between about 6° and 10° with respect to a bottom perpendicular to the longitudinal axis of the plasma chamber, until reaching the impact cavity 605. This cavity 605 is a free space in which the entire flow descending along the walls 602 and bottom 604 of the truncated cone impacts. The impact region 606 is equidistant to the walls of the truncated cone 602. At the same time, this impact region is placed at a defined distance above the impact cavity 605, so the impact is generated in a space that is free of material which may generate opposition to the physical and chemical changes of the wastewater.

At the time of impact, the wastewater expands into the upper and lower parts, forming a gaseous phase which is ionised such that it forms a plasma. Due to this expansion in the direction perpendicular to the flow of the impact forming a rhomboidal shape, the impact cavity 605 is created for the purpose of allowing the free vaporisation of the wastewater. Once the impact occurs and water enters the gaseous phase, it suddenly goes back to the liquid state, with the flow being led into the final circuit 701, returning the residual flow to the neutralisation tank from which it was taken.

The final circuit 701 having initial segment 702 only runs along the inside of the plasma chamber until surpassing the compression openings 501. The second segment 703 of this final circuit 701 is defined be being twice the nominal diameter of the first segment 702 of this final circuit 701.

Based on the foregoing, the device object of the invention allows performing the following method, according to the described steps, for purifying wastewater with metals, non-metals and metalloids:
- Introducing a volume of flow of wastewater to be purified in the device of the invention,
- Establishing a turbulent flow in the channeling of a wastewater with metals, non-metals and metalloids,
- Homogenising the wastewater,
- Dividing the mixture into four independent volumes of flow,
- Generating a strong turbulent flow in each of the independent volumes of flow,
- Joining of the four volumes of flow at the inlet of the plasma chamber,
- Increasing volume of flow compression and speed,
- Impacting, decompressing and vaporising the volume of flow in the chamber,
- lonising the volume of flow until plasma is formed due to the impact of the particles in the volume of flow, and
- Channeling and integrating the volume of flow towards the outlet of the device of the invention.

The preferred general measurements of the device or equipment object of the present invention are:
- Height: 80 cm
- Width: 20 cm
- Length: 80 cm

Three examples of the implementation of the device and method object of the present invention for the treatment of wastewater with different pollutants are briefly described below.

### Embodiment 1.- Precipitation of Chromium, Copper, Nickel, Boron and Zinc.

In many industrial sectors, highly polluting elements, which, in most cases, can be antagonistic under precipitation/coagulation conditions, must be eliminated. With the already complicated objective of complying with the environmental limits of each element independently, this complexity is increased when the elements compete with one another or present completely different precipitation/coagulation conditions. Current purification processes do not achieve, in most cases, high enough treatment efficiencies so comply with the environmental limits. At the same time, these processes are not stable over time, failing to meet objectives in a one-year period by more than 90 %, failing to comply with dumping regulations during many periods. Another added problem involves the purification times, which are longer than 30 minutes in most of the treatment and significantly limit the yield of current physicochemical purification systems.

The device object of the invention was placed in a real physicochemical purification system for a period of several years. The objectives established in environmental regulations are met by means of the present invention. To that end the purification system was used with the pH value in the neutralisation tank being adjusted to prevent corrosive processes of water, which is extremely acidic with a pH value of 1. The invention eliminates the chromium, copper, nickel and zinc metals and the boron metalloid in a time of less than the 8 minutes for precipitation and separation thereof. The reduction efficiency is around 99.9 % achieving values less than 1 mg/l in all the metals with an initial concentration of metals in the wastewater greater than 500 mg/l. At the same time, efficiency has been maintained over time despite the variability in terms of the concentration of the industrial wastewater throughout the first year of work. 512 measurements were taken, 2 of which presented a value outside the dumping target, the invention achieving efficiency of 99.8 % throughout the first year. This value exceeded the efficiency of the previous year of the plant, which was 72.3 % by means of a standard physicochemical treatment.

The volume of wastewater treated was 10 m³/h, which represents an annual volume of flow of 40,960 m³. The cost of treatment per cubic metre was less than 0.8 €. Treatment entails the complete elimination of precipitation/coagulation additives which consisted of the preceding treatment in an aluminium salt, which is a precipitation/coagulation additive.

The results obtained during the first year are shown in the following table:

| Element | Mean annual inlet concentration for purification in mg/l | Maximum annual outlet concentration in mg/l | Mean annual outlet concentration in mg/l |
|---|---|---|---|
| Chrominum | **2,854.00** | **0.89** | **0.65** |
| Copper | **589.00** | **0.12** | **0.05** |
| Nickel | **1,428.00** | **0.54** | **0.16** |
| Zinc | **2,420.00** | **0.47** | **0.14** |
| Boron | **896.00** | **0.90** | **0.80** |

### Embodiment 2. Reduction of Fluorine, Iron and Aluminium.

In certain sectors, the elimination of antagonistic elements is performed by means of diluting the wastewater, or else by meeting the objective in only one of the elements. This does not allow some sectors to comply with increasingly stricter environmental limits. The device of the invention was installed in a purification plant for a period of more than one year in which it was used for recirculation into the neutralisation tank. The installation was carried out in a simple manner using 4 metres of pipe, a centrifugal pump and the device. The treatment volume of flow was 5 cubic metres an hour for 16 hours a day. The previous aluminium salt-based addition products were removed for the installation. The pH was adjusted as it was required under environmental regulations.

The invention reduces pollutants in a maximum time of 6 minutes and the obtained values entailed a significant reduction of the values of the pollutants. The values improved with respect to the values of the previous treatment by 27 % and the objectives of eliminating aluminium, iron and fluorine pollutants were met. With regard to compliance with the regulatory dumping limits, the previous treatment had an annual efficiency of 72 %, which is a low percentage due to the antagonism of fluorine and aluminium in terms of their precipitation conditions. The efficiency increase to 99.2 %, with the plant recovering the correct environmental path.

The values obtained during the first year are shown in the following table:

| Element | Mean annual inlet concentration for purification in mg/l | Maximum annual outlet concentration in mg/l | Mean annual outlet concentration in mg/l |
|---|---|---|---|
| Aluminum | **485.00** | **0.79** | **0.75** |
| Iron | **280.00** | **0.88** | **0.45** |
| Fluorine | **325.00** | **0.98** | **0.82** |

### Embodiment 3. Precipitation of Lead, Magnesium, Manganese and Phosphorus

During the one year evaluation period, the efficiency of the invention in a physicochemical purification system with a daily volume of flow of 2,400 m³/h was measured. The objectives of the purification plant were to increase treatment efficiency in terms of the elimination of the target metals by 91 % and to reduce the cost of treatment. The device of the invention scaled to the volume of flow of the plant was installed for that purpose and the coagulation additives were eliminated. Treatment during the first year reached an efficiency of 99.9 % and the costs of treatment were reduced by 34.4 %. The one year metal results are summarised in the following table:

| Element | Mean annual inlet concentration for purification in mg/l | Maximum anual outlet concentration in mg/l | Mean annual outlet concentration in mg/l |
|---|---|---|---|
| Lead | **282.00** | **0.15** | **0.15** |
| Manganese | **185.00** | **0.12** | **0.05** |
| Magnesium | **380.00** | **0.27** | **0.05** |
| Phosphates | **425.00** | **0.35** | **0.28** |

## Claims

1. A device for the physicochemical treatment of wastewater containing metal, non-metal and metalloid pollutant chemical species, **characterised in that** it comprises:
- A residual liquid inlet manifold (101),
- A rapid mixing chamber (201) following the manifold (101),
- Four turbulent flow circuits (401), departing from the mixing chamber (201), comprising pressure regulation valves (301) at the inlet of each circuit (401),
- Four compression openings (501), at the end of the turbulent flow circuits (401), compressing in diameter and flattening each circuit, becoming wider, such that a sheet of water less than 0.15 mm in thickness is generated, with a turn of between 40° and 44° for each circuit,
- A plasma chamber (601), into which the four openings (501) at the end of the turbulent flow circuits (401) converge, is formed by a truncated cone with its side walls (602) intended for laminar flows to pass over the same and with an impact cavity (605), at the bottom (604) of the chamber (601), and above said impact cavity (605) a physical impact region or point (606) of the flow coming from the four compression openings (501) is placed, said impact cavity (605) and impact region or point (606) being placed opposite the four compression openings (501),
- An outlet circuit or manifold (701) for channeling the outflowing water from the chamber.

2. The device according to claim 1, **characterised in that** the walls (602) of the plasma chamber (601) converge at the bottom (604) of the chamber (601) through a slight curve (603) with a turn of between about 81° and 83° to divert the laminar flows from the walls (602) to the impact space (606).

3. The device according to any of the preceding claims, **characterised in that** the lower diameter of the plasma chamber (601) in the lower part thereof is 0.82 times the upper diameter of the chamber (601), through which the flow penetrates.

4. The device according to any of the preceding claims, **characterised in that** the valves (301) are made of a high-density plastic polymer that withstands pressures of up to 250 bar and high temperatures of up to 500°C.

5. A method for the physicochemical treatment of wastewater containing metal, non-metal and metalloid pollutant chemical species, **characterised in that** it comprises the following steps:
- Introducing a volume of flow of wastewater to be purified, with metals and/or non-metals and/or metalloids, in a device according to any of claims 1 to 4, for the treatment of wastewater, through the inlet manifold (101),
- Homogenising the wastewater in the rapid mixing chamber (201),
- Dividing the homogenised mixture into four independent volumes of flow departing from the mixing chamber (201) through the four turbulent flow circuits (401),
- Generating a strong turbulent flow in each of the four turbulent flow circuits (401) after the pressure regulation valves (301),
- Joining of the four volumes of flow from the turbulent flow circuits (401) converging at the inlet of the plasma chamber (601),
- Increasing compression and speed of the volume of flow at the four compression openings (501) creating four laminar flows, at the end of the four turbulent flow circuits (401),
- Impacting, decompressing and vaporising the volume of flow in the impact region or point (606) of the plasma chamber (601) where the volume of flow speed and compression are eliminated,
- lonising the volume of flow until plasma is formed due to the impact of the particles in the volume of flow, and
- Channeling and integrating the volume of flow towards the outlet (701) of the device.

6. The method according to claim 5, **characterised in that** laminar flows are generated in the walls (602) of the plasma chamber (601) by flow compression and speed greater than 200 m/s which are directed to a bottom plane (604) which diverts said laminar flows to the impact region or point (606) after which there is arranged the outlet manifold (701) which evacuates the flow subjected to the impact or collision.

7. The method according to any of claims 5 or 6, **characterised in that** once speed and pressure conditions have been reached, the flow impacts at the impact region or point (606) of the plasma chamber (605) whereby the conditions are created so that the flow is vaporised and the plasma state is reached, creating precipitation/coagulation processes.

8. The method according to any of claims 5 to 7, **characterised in that** the volume of flow of wastewater to be purified includes high initial concentration levels of pollutants between 1,000 and 3,000 ppm.

9. The method according to any of claims 5 to 8, **characterised in that** the outlet volume of flow has pollutants at less than 1 ppm.

10. The method according to any of claims 5 to 9, **characterised in that** the reduction of pollutants is performed at times of about 8 minutes, including the separation of said pollutants.

11. The method according to claim 5, **characterised in that** it does not use additives for the formation of precipitation colloids.

## Patentansprüche

1. Vorrichtung zur physikalisch-chemischen Behandlung von Abwässern, die metallische, nicht-metallische und metalloide chemische Schadstoffe enthalten, **dadurch gekennzeichnet, dass** sie Folgendes umfasst:
- einen Restflüssigkeitseinlassverteiler (101),
- eine Schnellmischkammer (201) im Anschluss an den Verteiler (101),
- vier turbulente Strömungskreisläufe (401), die von der Mischkammer (201) ausgehen und Druckregulierungsventile (301) an dem Einlass jedes Kreislaufs (401) umfassen,
- vier Verdichtungsöffnungen (501) an dem Ende der turbulenten Strömungskreisläufe (401), die sich im Durchmesser verdichten und jeden Kreislauf abflachen und verbreitern, sodass eine Wasserschicht mit einer Dicke von weniger als 0,15 mm entsteht, mit einer Drehung zwischen 40° und 44° für jeden Kreislauf,
- eine Plasmakammer (601), in der die vier Öffnungen (501) an dem Ende der turbulenten Strömungskreisläufe (401) zusammenlaufen, wird durch einen Kegelstumpf mit seinen Seitenwänden (602), die für den Durchgang der laminaren Strömungen bestimmt sind, und mit einem Aufprallhohlraum (605) an dem Boden (604) der Kammer (601) gebildet, und oberhalb des Aufprallhohlraums (605) ein physischer Aufprallbereich oder -punkt (606) der von den vier Verdichtungsöffnungen (501) kommenden Strömung angeordnet ist, wobei der Aufprallhohlraum (605) und der Aufprallbereich oder -punkt (606) gegenüber den vier Verdichtungsöffnungen (501) angeordnet sind,
- Ein Auslasskreislauf oder Verteiler (701) zum Kanalisieren des aus der Kammer ausströmenden Wassers.

2. Vorrichtung nach Anspruch 1, **dadurch gekennzeichnet, dass** die Wände (602) der Plasmakammer (601) am dem Boden (604) der Kammer (601) durch eine leichte Kurve (603) mit einer Drehung zwischen etwa 81° und 83° konvergieren, um die laminaren Strömungen von den Wänden (602) in den Aufprallraum (606) zu leiten.

3. Vorrichtung nach einem der vorhergehenden Ansprüche, **dadurch gekennzeichnet, dass** der untere Durchmesser der Plasmakammer (601) in ihrem unteren Teil das 0,82-fache des oberen Durchmessers der Kammer (601) beträgt, durch die die Strömung eindringt.

4. Vorrichtung nach einem der vorhergehenden Ansprüche, **dadurch gekennzeichnet, dass** die Ventile (301) aus einem hochdichten Kunststoffpolymer bestehen, das Drücke von bis zu 250 bar und hohe Temperaturen von bis zu 500 °C standhält.

5. Verfahren zur physikalisch-chemischen Behandlung von Abwässern, die metallische, nicht-metallische und metalloide chemische Schadstoffe enthalten, **dadurch gekennzeichnet, dass** es die folgenden Schritte umfasst:
- Einleiten eines Volumenstroms des zu reinigenden Abwassers mit Metallen und/oder Nichtmetallen und/oder Metalloiden in eine Vorrichtung nach einem der Ansprüche 1 bis 4 zu der Behandlung von Abwasser durch den Einlassverteiler (101),
- Homogenisieren des Abwassers in der Schnellmischkammer (201),
- Aufteilen der homogenisierten Mischung in vier unabhängige Strömungsvolumina, die von der Mischkammer (201) durch die vier turbulenten Strömungskreisläufe (401) austreten,
- Erzeugen einer starken turbulenten Strömung in jedem der vier turbulenten Strömungskreise (401) nach den Druckregelventilen (301),
- Zusammenführen der vier Strömungsvolumina aus den turbulenten Strömungskreisläufen (401), die an dem Einlass der Plasmakammer (601) zusammenlaufen,
- Erhöhen der Verdichtung und der Geschwindigkeit des Volumenstroms an den vier Verdichtungsöffnungen (501), die vier laminare Strömungen schaffen, an dem Ende der vier turbulenten Strömungskreise (401),
- Aufprallen, Dekomprimieren und Verdampfen des Volumenstroms im Aufprallbereich oder -punkt (606) der Plasmakammer (601), wo die Geschwindigkeit des Volumenstroms und die Verdichtung aufgehoben werden,
- Ionisieren des Volumenstroms, bis durch den Aufprall der Partikel im Volumenstrom Plasma entsteht und
- Kanalisieren und Integrieren des Volumenstroms zu dem Auslass (701) der Vorrichtung.

6. Verfahren nach Anspruch 5, **dadurch gekennzeichnet, dass** in den Wänden (602) der Plasmakammer (601) durch eine Strömungsverdichtung und eine Geschwindigkeit von mehr als 200 m/s laminare Strömungen erzeugt werden, die zu einer Bodenebene (604) geleitet werden, die die laminaren Strömungen zum Aufprallbereich oder -punkt (606) ablenkt, nach dem der Auslassverteiler (701) angeordnet ist, der die dem Aufprall oder der Kollision ausgesetzte Strömung abführt.

7. Verfahren nach einem der Ansprüche 5 oder 6, **dadurch gekennzeichnet, dass** die Strömung, sobald die Geschwindigkeits- und Druckbedingungen erreicht sind, auf den Aufprallbereich oder -punkt (606) der Plasmakammer (605) auftrifft, wodurch die Bedingungen geschaffen werden, so dass die Strömung verdampft und der Plasmazustand erreicht wird, wodurch Ausfällungs-/Koagulationsprozesse entstehen.

8. Verfahren nach einem der Ansprüche 5 bis 7, **dadurch gekennzeichnet, dass** der Volumenstrom des zu reinigenden Abwassers hohe Anfangskonzentrationen an Schadstoffen zwischen 1.000 und 3.000 ppm beinhaltet.

9. Verfahren nach einem der Ansprüche 5 bis 8, **dadurch gekennzeichnet, dass** das Auslassvolumen des Volumenstroms Schadstoffe von weniger als 1 ppm aufweist.

10. Verfahren nach einem der Ansprüche 5 bis 9, **dadurch gekennzeichnet, dass** die Reduzierung der Schadstoffe in Zeiten von etwa 8 Minuten erfolgt, einschließlich der Abtrennung der Schadstoffe.

11. Verfahren nach Anspruch 5, **dadurch gekennzeichnet, dass** es keine Zusätze zur Bildung von Fällungskolloiden verwendet.

## Revendications

1. Dispositif de traitement physico-chimique des eaux usées contenant du métal, des espèces chimiques polluantes non métalliques et métalloïdes, **caractérisé en ce qu'**il comprend :
- un collecteur d'entrée de liquide résiduel (101),
- une chambre de mélange rapide (201) à la suite du collecteur (101),
- quatre circuits à écoulement turbulent (401), partant de la chambre de mélange (201), comprenant des soupapes de régulation de pression (301) au niveau de l'entrée de chaque circuit (401),
- quatre ouvertures de compression (501), au niveau de l'extrémité des circuits d'écoulement turbulent (401), comprimant en diamètre et aplatissant chaque circuit, s'élargissant, de telle sorte qu'une nappe d'eau de moins de 0,15 mm d'épaisseur est générée, avec un virage compris entre 40 ° et 44° pour chaque circuit,
- une chambre à plasma (601), dans laquelle convergent les quatre ouvertures (501) au niveau de l'extrémité des circuits d'écoulement turbulent (401), est formée d'un tronc de cône avec ses parois latérales (602) destinées au passage d'écoulements laminaires et d'une cavité d'impact (605), au niveau du fond (604) de la chambre (601), et au-dessus de ladite cavité d'impact (605) est placée une région ou point d'impact physique (606) de l'écoulement provenant des quatre ouvertures de compression (501), ladite cavité d'impact (605) et ladite région ou point d'impact (606) étant placés en regard des quatre ouvertures de compression (501),
- un circuit ou collecteur de sortie (701) pour canaliser l'eau sortant de la chambre.

2. Dispositif selon la revendication 1, **caractérisé en ce que** les parois (602) de la chambre à plasma (601) convergent au niveau du fond (604) de la chambre (601) par une légère courbe (603) avec un virage compris entre environ 81° et 83° pour dévier les écoulements laminaires des parois (602) vers l'espace d'impact (606).

3. Dispositif selon l'une quelconque des revendications précédentes, **caractérisé en ce que** le diamètre inférieur de la chambre à plasma (601) dans sa partie inférieure est 0,82 fois le diamètre supérieur de la chambre (601), à travers laquelle pénètre l'écoulement.

4. Dispositif selon l'une quelconque des revendications précédentes, **caractérisé en ce que** les soupapes (301) sont constituées d'un polymère plastique haute densité qui résiste à des pressions allant jusqu'à 250 bars et à des températures élevées allant jusqu'à 500 °C.

5. Procédé de traitement physico-chimique d'eaux usées contenant du métal, des espèces chimiques polluantes non métalliques et métalloïdes, **caractérisé en ce qu'**il comprend les étapes suivantes :
- introduction d'un volume d'écoulement d'eaux usées à épurer, avec des métaux et/ou des non-métaux et/ou des métalloïdes, dans un dispositif selon l'une quelconque des revendications 1 à 4, pour le traitement des eaux usées, à travers le collecteur d'entrée (101),
- homogénéisation des eaux usées dans la chambre de mélange rapide (201),
- division du mélange homogénéisé en quatre volumes indépendants d'écoulement partant de la chambre de mélange (201) à travers les quatre circuits d'écoulement turbulent (401),
- génération d'un fort écoulement turbulent dans chacun des quatre circuits d'écoulement turbulent (401) après les soupapes de régulation de pression (301),
- rassemblement des quatre volumes d'écoulement issus des circuits d'écoulement turbulent (401) convergeant au niveau de l'entrée de la chambre à plasma (601),
- augmentation de la compression et de la vitesse du volume d'écoulement au niveau des quatre ouvertures de compression (501) créant quatre écoulements laminaires, au niveau de l'extrémité des quatre circuits d'écoulement turbulent (401),
- l'impact, la décompression et la vaporisation du volume d'écoulement dans la région ou point d'impact (606) de la chambre à plasma (601) où le volume de vitesse et de compression d'écoulement sont éliminés,
- ionisation du volume d'écoulement jusqu'à formation de plasma du fait de l'impact des particules dans le volume d'écoulement, et
- canalisation et intégration du volume d'écoulement vers la sortie (701) du dispositif.

6. Procédé selon la revendication 5, **caractérisé en ce que** des écoulements laminaires sont générés dans les parois (602) de la chambre à plasma (601) par compression d'écoulement et vitesse supérieure à 200 m/s qui sont dirigés vers un plan inférieur (604) qui dévie lesdits écoulements laminaires vers la région ou point d'impact (606) après lequel est agencé le collecteur de sortie (701) qui évacue l'écoulement soumis à l'impact ou à la collision.

7. Procédé selon l'une quelconque des revendications 5 ou 6, **caractérisé en ce qu'**une fois les conditions de vitesse et de pression atteintes, l'écoulement frappe la région ou le point d'impact (606) de la chambre à plasma (605), grâce à quoi les conditions sont créées pour que l'écoulement soit vaporisé et que l'état de plasma soit atteint, créant des processus de précipitation/coagulation.

8. Procédé selon l'une quelconque des revendications 5 à 7, **caractérisé en ce que** le volume d'écoulement d'eaux usées à épurer comporte des niveaux de concentration initiale élevés de polluants compris entre 1 000 et 3 000 ppm.

9. Procédé selon l'une quelconque des revendications 5 à 8, **caractérisé en ce que** le volume d'écoulement de sortie présente des polluants à moins de 1 ppm.

10. Procédé selon l'une quelconque des revendications 5 à 9, **caractérisé en ce que** la réduction des polluants est réalisée selon des temps d'environ 8 minutes, comportant la séparation desdits polluants.

11. Procédé selon la revendication 5, **caractérisé en ce qu'**il n'utilise pas d'additifs pour la formation de colloïdes de précipitation.
